# EUROPEAN PATENT APPLICATION

(11) **EP 4 451 727 A1**
(43) Date of publication of application: **23.10.2024**
(21) Application number: 23737032.5
(22) Date of filing: 04.01.2023
(51) Int. Cl.: H04W 24/02

(54) **NETWORK SLICE PROCESSING METHOD AND APPARATUS, RELATED DEVICE, AND STORAGE MEDIUM**

(30) Priority: 05.01.2022 CN 202210004836
(71) Applicant: CHINA MOBILE COMMUNICATION CO., LTD. RESEARCH INSTITUTE, Beijing 100053 (CN); CHINA MOBILE COMMUNICATIONS GROUP CO., LTD., Beijing 100032 (CN)
(72) Inventor: CHEN, Ningyu, Beijing 100053 (CN); TAN, Jiayao, Beijing 100053 (CN); HAN, Xingyu, Beijing 100053 (CN)
(74) Representative: J A Kemp LLP
(86) International application number: PCT/CN2023/070370
(87) International publication number: WO 2023/131168

(57) **Abstract**

The present application discloses a network slice processing method and apparatus, a network device, a terminal, and a storage medium. The method comprises: the network device mapping, according to first information of a serving cell, at least one network slice supported by a neighboring cell into at least one slice group, the first information representing a mapping relationship between a slice and a slice group; and sending second information, the second information at least comprising at least one slice group identifier.

## Description

### CROSS-REFERENCE TO RELATED APPLICATION

This application is filed based on and claims priority to Chinese Patent application No. 202210004836.3, filed on January 5, 2022, the content of which is hereby incorporated by reference in its entirety.

### TECHNICAL FIELD

The disclosure relates to the field of wireless communication, and in particular to a method and apparatus for processing network slices, related devices, and a storage medium.

### BACKGROUND

A network slice (which may be referred to as a slice for short) can provide differentiated services for different user groups. In the related art, a terminal may acquire slices supported in a registration area through a dedicated signaling. However, since the terminal obtains slice information of a registration area granularity, the terminal cannot obtain the slice information of a neighboring cell. That is, the terminal cannot learn slice information of a cell granularity, and thus cannot select a cell that is suitable for its own slice based on the slice information supported by the neighboring cell.

### SUMMARY

To solve the technical problem in the related art, embodiments of the disclosure provide methods and apparatuses for processing network slices, related devices, and a storage medium.

The technical solutions of the disclosure are implemented as follows.

An embodiment of the disclosure provides a method for processing network slices, which is applied to a network device and includes the following operations.

At least one network slice supported by a neighboring cell is mapped into at least one slice group based on first information of a serving cell. The first information represents mapping relationships between the network slices and the slice groups.

Second information is sent. The second information at least comprises at least one slice group identifier.

In the above solution, the second information further includes a frequency priority of at least one slice group.

In the above solution, the first information corresponds to one or more tracking areas (TAs).

In the above solution, the method further includes the following operation.

The mapping relationships between the network slices and the slice groups are acquired.

In the above solution, acquiring the mapping relationships between the network slices and the slice groups includes the following operation.

The mapping relationships between the network slices and the slice groups configured by a network management device are received; or the mapping relationships between the network slices and the slice groups sent by a core network device are received.

In the above solution, in a case of receiving the mapping relationships between the network slices and the slice groups configured by the network management device, the method further includes the following operation.

A subset or a universal set of the mapping relationships between the network slices and the slice groups configured by the network management device is sent to the core network device.

In the above solution, the method further includes the following operation.

The at least one network slice supported by the neighboring cell is acquired.

In the above solution, acquiring the at least one network slice supported by the neighboring cell includes the following operation.

The at least one network slice supported by the neighboring cell sent by a network device of the neighboring cell is received.

In the above solution, the method further includes the following operations.

In a case that at least one slice supported by the neighboring cell cannot be mapped into slice group(s) based on the first information, third information is sent to a core network device. The third information is at least used for requesting to assign mapping relationship(s) to the at least one slice that cannot be mapped into the slice group(s).

New mapping relationship(s) sent by the core network device are received; and the at least one slice that cannot be mapped into the slice group(s) is mapped into slice group(s) by using the new mapping relationship(s).

In the above solution, the method further includes the following operation.

The first information is updated by using the new mapping relationship(s).

In the above solution, the second information is broadcast.

An embodiment of the disclosure provides a method for processing network slices, which is applied to a terminal and includes the following operations.

Second information is received. The second information at least includes at least one slice group identifier of a neighboring cell.

At least one network slice supported by the neighboring cell is determined based on the second information and fourth information. The fourth information represents mapping relationships between the network slices and the slice groups.

Cell reselection is performed based on the at least one network slice supported by the neighboring cell.

In the above solution, the second information further includes a frequency priority of the at least one slice group.

In the above solution, the fourth information corresponds to one or more tracking areas (TAs).

In the above solution, the method further includes the following operation.

The fourth information is acquired.

In the above solution, acquiring the fourth information includes the following operation.

The fourth information sent by network side is received.

In the above solution, performing the cell reselection based on the at least one network slice supported by the neighboring cell includes the following operations.

A frequency priority of the at least one network slice supported by the neighboring cell is determined.

The cell reselection is performed based on the frequency priority of the at least one network slice supported by the neighboring cell.

In the above solution, receiving the second information includes the following operation.

The second information is received from broadcast.

In the above solution, the method further includes the following operations.

When a TA is updated, mapping relationship(s) between network slice(s) and slice group(s) of the updated TA are acquired.

The fourth information is updated by using the updated mapping relationship(s) between the network slice(s) and the slice group(s).

An embodiment of the disclosure further provides an apparatus for processing network slices, which includes a first processing unit and a first sending unit.

The first processing unit is configured to map, based on first information of a serving cell, at least one network slice supported by a neighboring cell into at least one slice group. The first information represents mapping relationships between the network slices and the slice groups.

The first sending unit is configured to send second information. The second information at least includes at least one slice group identifier.

An embodiment of the disclosure further provides an apparatus for processing network slices, which includes a first receiving unit, a second processing unit and a third processing unit.

The first receiving unit is configured to receive second information. The second information at least includes at least one slice group identifier of a neighboring cell.

The second processing unit is configured to determine at least one network slice supported by the neighboring cell based on the second information and fourth information. The fourth information represents mapping relationships between the network slices and the slice groups.

The third processing unit is configured to perform cell reselection based on the at least one network slice supported by the neighboring cell.

An embodiment of the disclosure further provides a network device, which includes a first processor and a first communication interface.

The first processor is configured to map, based on first information of a serving cell, at least one network slice supported by a neighboring cell into at least one slice group. The first information represents mapping relationships between the network slices and the slice groups.

The first communication interface is configured to send second information. The second information at least includes at least one slice group identifier.

An embodiment of the disclosure further provides a terminal, which includes a second communication interface and a second processor.

The second communication interface is configured to receive second information. The second information at least includes at least one slice group identifier of a neighboring cell.

The second processor is configured to: determine at least one network slice supported by the neighboring cell based on the second information and fourth information. The fourth information represents mapping relationships between the network slices and the slice groups. The second processor is further configured to perform cell reselection based on the at least one network slice supported by the neighboring cell.

An embodiment of the disclosure further provides a network device, which includes a first processor and a first memory for storing a computer program capable of running on a processor.

The first processor is configured to perform operations of any method at the network device side mentioned above when running the computer program.

An embodiment of the disclosure further provides a terminal, which includes a second processor and a second memory for storing a computer program capable of running on a processor.

The second processor is configured to perform operations of any method at the terminal side mentioned above when running the computer program.

An embodiment of the disclosure provides a storage medium storing a computer program. When the computer program is executed by a processor, operations of any method at the network device side mentioned above are implemented, or operations of any method at the terminal side mentioned above are implemented.

The embodiments of the disclosure provide methods and apparatuses for processing network slices, related devices, and a storage medium. The network device maps, based on the first information of a serving cell, at least one network slice supported by the neighboring cell into at least one slice group, and sends the second information. The first information represents mapping relationships between the network slices and the slice groups, and the second information at least includes at least one slice group identifier. The terminal receives the second information, determines the at least one network slice supported by the neighboring cell based on the second information and fourth information, and performs the cell reselection based on the at least one network slice supported by the neighboring cell. The fourth information represents the mapping relationships between the network slices and the slice groups. With solutions provided in the embodiments of the disclosure, since the network device does not directly send the slice identifier supported by the neighboring cell, but instead sends the slice group identifier corresponding to the slice, a security risk caused by directly sending the slice identifier is avoided. At the same time, the terminal determines the at least one network slice supported by the neighboring cell based on the at least one slice group identifier and the mapping relationships between the network slices and the slice groups, and performs the cell reselection based on the at least one network slice supported by the neighboring cell, so that the terminal can select a cell that supports the desired slice of the terminal (i.e. select the cell that is suitable for its own slice).

### BRIEF DESCRIPTION OF THE DRAWINGS

FIG. 1 is a flowchart illustrating a method for processing network slices according to an embodiment of the disclosure.
FIG. 2 is a flowchart illustrating a method for processing network slices according to another embodiment of the disclosure.
FIG. 3 is a structural diagram of an apparatus for processing network slices according to an embodiment of the disclosure.
FIG. 4 is a structural diagram of an apparatus for processing network slices according to another embodiment of the disclosure.
FIG. 5 is a structural diagram of a network device according to an embodiment of the disclosure.
FIG. 6 is a structural diagram of a terminal according to an embodiment of the disclosure.
FIG. 7 is a structural diagram of a system for processing network slices according to an embodiment of the disclosure.

### DETAILED DESCRIPTION

The disclosure will be further described in detail below in combination with the drawing and the embodiments.

If a base station directly broadcasts slice information (for example, slice identifier (ID), i.e., single network slice selection Assistance information (S-NSSAI)), there may be a security risk. For example, a non-registered terminal or an illegal terminal can learn what slices are supported by the present cell through receiving system information, and when a slice of the cell is identified as a security-sensitive slice (such as a military slice, etc.), destruction will be implemented. Therefore, in the related art, the broadcast of the slice information is not supported, and the slice information is sent to a terminal through a dedicated signaling from a core network. The terminal learns the slices supported in the registration area. The registration area includes several cells, that is, the slice information of a registration area granularity is learned.

However, in this way, because the terminal obtains the slice information of the registration area granularity, the terminal cannot learn the slice information of the neighboring frequency point or neighboring cell, that is, the terminal cannot obtain the slice information of a frequency point granularity or of a cell granularity, and thus cannot select a frequency point or cell that is suitable for its own slice based on the slice information supported by the neighboring frequency or the neighboring cell.

Based on this, in various embodiments of the disclosure, a safe method for transmitting slice information is provided, so that the terminal can obtain the slice information supported by the neighboring cell, so as to select a cell that is suitable for its own slice based on the slice information supported by the neighboring cell.

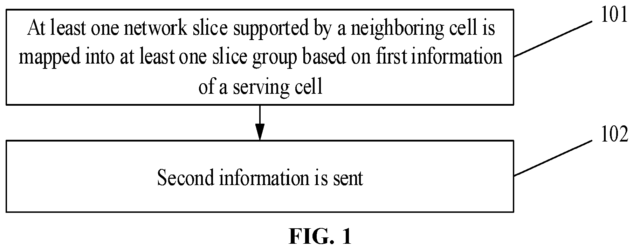

An embodiment of the disclosure provides a method for processing network slices method, which is applied to a network device (which, specifically, may be a base station). As illustrated in FIG. 1, the method includes the following operations.

At operation 101, at least one network slice supported by a neighboring cell is mapped into at least one slice group based on first information of a serving cell. The first information represents mapping relationships between the network slices and the slice groups.

At operation 102, second information is sent. The second information at least includes at least one slice group identifier. In other words, the second information at least includes an identifier of the mapped at least one slice group.

Herein, the terminal learns at least one network slice supported by the neighboring cell through the at least one slice group identifier, so that the security risk caused by directly sending the slice identifier can be avoided. The slice identifier may include network slice selection assistance information (NSSAI) or S-NSSAI. In other words, the second information does not directly contain the slice identifier, i.e., NSSAI or S-NSSAI, and the second information needs to be processed to obtain the slice identifier, so that the security of the second information transmission can be ensured.

Accordingly, the network device may send the second information by broadcasting a system message.

Based on this, in an embodiment, a specific implementation of the operation 102 may include the following operation.

The second information is broadcast.

Herein, in a practical application, the system messages used by the network device to broadcast the second information can be specifically set based on the requirements, which is not limited by the embodiments of the disclosure. Exemplarily, the network device may broadcast the second information through reselection system information in the system message to indicate that at least one network slice supported by the neighboring cell of the terminal is used for cell reselection. Alternatively, the network device may broadcast the second information through slice system information in the system message to indicate at least one network slice supported by the neighboring cell of the terminal.

In a practical application, after receiving the second information from broadcast, the terminal may decode the second information based on the second information and fourth information representing the mapping relationships between the network slices and the slice groups, to obtain at least one slice identifier corresponding to at least one slice group identifier contained in the second information, that is, slice information supported by the neighboring cell is obtained. In other words, at least one network slice supported by the neighboring cell is determined.

In a practical application, after the terminal determines at least one network slice supported by the neighboring cell based on the second information and the fourth information, the terminal can perform cell reselection based on the at least one network slice supported by the neighboring cell, that is, reselect a target cell. In a process of the cell reselection, the terminal may determine whether the target cell supports slice suitable for itself according to the at least one network slice supported by the neighboring cell, so that the terminal can select the cell that is suitable for its slice.

In a practical application, the second information can also be referred to as reselected slice group information. A specific name of the second information is not limited by the embodiments of the disclosure, as long as the function of the second information can be realized.

In a practical application, the mapping relationships between the slices and the slice groups can also be called correspondences between the slices and the slice groups.

In a practical application, the terminal may also be referred to as User Device (UE), or may be referred to as a user.

In a practical application, the mapping relationships between slices and slice groups can be divided based on a TA (i.e., the mapping relationships is divided based on each TA (i.e., per TA in English), that is, the mapping relationship is for one TA). Since a cell can include one or more TAs, the first information may correspond to one or more TAs.

In a practical application, the mapping relationships between slices and slice groups of different TAs may be different, i.e., the first information of the serving cell may be different from the first information of the neighboring cell. Accordingly, the slice group mapped based on the first information of the serving cell may be different from the slice group mapped based on the first information of the neighboring cell. If the slice group mapped based on the first information of the neighboring cell is sent directly to the terminal through the present cell (i.e. a network device of the serving cell), the terminal may not be able to correctly decode the at least one network slice supported by the neighboring cell.

Therefore, the network device maps the at least one network slice supported by the neighboring cell into the at least one slice group based on the first information of the serving cell, and broadcasts the second information, that at least comprises the identifier of the at least one slice group. In this way, the terminal can correctly decode the at least one network slice supported by the neighboring cell.

In a practical application, the network device needs to acquire the first information of the serving cell before performing operation 101.

Based on this, in an embodiment, the method may further include the following operation.

The mapping relationships between the network slices and the slice groups are acquired.

In a practical application, if the core network and the base station independently configure the mapping relationships between slices and slice groups through their respective network management devices, the mapping relationships between slices and slice groups in the core network, base station and terminal may be inconsistent. In order to ensure that the terminal correctly decodes the at least one network slice supported by the neighboring cell, it is necessary to ensure the consistency of the mapping relationships between the slices and the slice groups stored in network side and the mapping relationships between the slices and the slice groups stored in terminal, that is, to ensure the consistency of the first information of the serving cell and the fourth information of the terminal in this cell.

Therefore, the network management device can directly configure the mapping relationships between the slices and the slice groups for the network device, and the network device sends the mapping relationships to the core network device, and the core network device sends the mapping relationships to the terminal. Alternatively, the network management device can configure the mapping relationships between the slices and the slice groups for the core network device, and the core network device sends the mapping relationships between the slices and the slice groups to the network device and the terminal.

Based on this, in an embodiment, acquiring the mapping relationships between the network slices and the slice groups may include the following operation.

The mapping relationships between the network slices and the slice groups configured by a network management device are received; or the mapping relationships between the network slices and the slice groups sent by a core network device are received.

Herein, in a practical application, the network management device may include a wireless network management device (e.g., a base station network management device) and/or a network management device of core network. In a case that the network management device includes the wireless network management device, the network management device can directly configure the mapping relationships between the slices and the slice groups for the network device, that is, the network device receives the mapping relationships between the slices and the slice groups configured by the network management device. In a case that the network management device includes the network management device of core network, the network management device can configure the mapping relationships between the slices and the slice groups for the core network device, and then the core network device sends the mapping relationships between the slices and the slice groups to the network device, that is, the network device receives the mapping relationships between the slices and the slice groups sent by the core network device.

In a practical application, the network side may include the network device and the core network device, ensuring the consistency of the mapping relationships between the slices and the slice groups stored on the network side and the terminal may be understood as: ensuring the consistency of the mapping relationships between the slices and the slice groups stored in the network device, core network device and terminal.

In a practical application, in order to ensure the consistency of the mapping relationships between the slices and the slice groups stored in the network device, core network device and terminal, in a case that the network management device directly configures the mapping relationships between the slices and the slice groups for the network device, the network device may send the mapping relationships between the slice and the slice group to the core network device, and the core network device sends the mapping relationships between the slices and the slice group to the terminal. In a case that the network management device configures the mapping relationships between the slices and the slice groups for the core network device, when the core network device sends the mapping relationships between the slices and the slice groups to the network device, the core network device further needs to send the mapping relationships between the slices and the slice groups to the terminal. In this way, through the two interactive mechanisms among the network management device, the network device, the core network device and the terminal, the consistency of the mapping relationships between the slices and the slice groups stored in the network device, core network device and terminal can be ensured, i.e., the coordination of the mapping relationships among the core network, the base station and the terminal is realized.

In a practical application, in order to save signaling resource, in a case that the network device receives the mapping relationships between the slices and the slice groups configured by the network management device, the network device can only send mapping relationship(s) between slice(s) and slice group(s) supported by itself to the core network device, i.e., only send a subset of the mapping relationships between the slices and the slice groups configured by the network management device to the core network device.

Based on this, in an embodiment, in a case of receiving the mapping relationships between the network slices and the slice groups configured by the network management device, the method further includes the following operation.

A subset or a universal set of the mapping relationships between the network slices and the slice groups configured by the network management device is sent to the core network device.

Herein, it should be understood that the subset of mapping relationships between slices and slice groups configured by the network management device includes the mapping relationship(s) between the slice(s) and slice group(s) supported by the network device. The universal set of the mapping relationships between slices and slice groups configured by the network management device includes all mapping relationships between the slices and the slice groups configured by the network management device.

In a practical application, after the network device sends the subset or the universal set of the mapping relationships between the slices and the slice groups configured by the network management device to the core network device, the core network device may send the subset or the universal set of the mapping relationships between the slices and the slice groups configured by the network management device to the terminal through a Non-access stratum (NAS) message. Since the NAS message is encrypted, the security of the mapping relationships transmission can be ensured.

In a practical application, in the case that the network management device includes the network management device of core network, after the network management device sends the configured mapping relationships between the slices and the slice groups to the core network device, the core network device may only send the mapping relationship(s) between the slice(s) and slice group(s) supported by itself to the network device and the terminal. In other words, the network device may receive the subset or the universal set of the mapping relationships between slices and slice groups configured by the network management device sent by the core network device.

Herein, the core network device may send the mapping relationships between the slices and the slice groups to the network device in a wired manner. That is, the network device can receive the mapping relationships between the slices and the slice groups sent by the core network device through an Ng interface, so that the security of the mapping relationships transmission can be ensured.

In a practical application, the core network device may be set based on the requirements. For example, the core network device may include an Access and Mobility Management Function (AMF).

In a practical application, after the network device acquires the mapping relationships between the slices and the slice groups from the network management device or the core network device, the network device can save the subset (i.e. the first information of the serving cell) or the universal set of the mapping relationships between the slices and the slice groups configured by the network management device to a local area. After the terminal receives the subset or the universal set of the mapping relationships between the slices and the slice groups configured by the network management device from the network side (i.e., the core network device) through the NAS message, i.e., after receiving the fourth information, the fourth information can be saved locally. In this way, the consistency of the mapping relationships between the slices and the slice groups in the terminal, network device and core network device can be ensured, i.e., the consistency between the first information of the serving cell and the fourth information of the terminal in this cell can be realized.

In a practical application, the network device needs to acquire the at least one network slice supported by the neighboring cell before performing operation 101.

Based on this, in an embodiment, the method may further include the following operation.

The at least one network slice supported by the neighboring cell is acquired.

Specifically, in a practical application, network devices in each cell may communicate with each other about at least one network slice supported by a corresponding cell. In other words, the network device may acquire at least one network slice supported by the neighboring cell from a network device of the neighboring cell.

Based on this, in an embodiment, acquiring the at least one network slice supported by the neighboring cell includes the following operation.

The at least one of network slices supported by the neighboring cell is received from a network device of the neighboring cell.

In a practical application, receiving the at least one of network slices supported by the neighboring cell from a network device of the neighboring cell may include that: a slice identifier of the at least one network slice supported by the neighboring cell from network device of the neighboring cell is received, that is, NSSAI or S-NSSAI.

In a practical application, the network devices in each cell may interact with the slice identifier of at least one network slice supported by the corresponding cell through an Xn interface. Alternatively, in a specific case, for example, in a case that the Xn interface does not exist between two network devices, the slice identifier of at least one network slice supported by the corresponding cell may be interacted through the Ng interfaces between "one network device-the core network device-another network device (e.g., base station 1-AMF-base station 2)".

Illustratively, a first network device and a second network device exchange at least one network slice supported by their respective cells. That is, the first network device acquires at least one network slice supported by the second network device, maps the at least one network slice supported by the second network device into at least one slice group based on first mapping relationship(s) (that is, first information of the first serving cell corresponding to the first network device), and sends the at least one slice group supported by the second network device to a first terminal through the system message. The second network device acquires at least one network slice supported by the first network device, maps the at least one network slice supported by the first network device into at least one slice group based on second mapping relationship(s) (i.e., first information of a second serving cell corresponding to the second network device), and sends the at least one slice group supported by the first network device to the second terminal through the system message.

In a practical application, in a case that the first information does not support the at least one network slice supported by the neighboring cell, i.e., in a case that it is determined based on the first information that at least one slice of at least one network slice supported by the neighboring area cannot be mapped into slice group(s), the network device may request a core network device to assign new mapping relationship(s) to the at least one network slice that cannot be mapped into slice group(s).

Based on this, in an embodiment, the method may include the following operations.

In a case that at least one slice of at least one network slice supported by the neighboring cell cannot be mapped into slice group(s) based on the first information, third information is sent to a core network device. The third information is used for requesting to assign mapping relationship(s) for the at least one network slice that cannot be mapped into the slice group(s).

New mapping relationship(s) sent by the core network device are received; and the at least one network slice that cannot be mapped into the slice group(s) is mapped into slice group(s) using the new mapping relationship(s).

In a practical application, the network device needs to save the new mapping relationship(s) locally.

Based on this, in an embodiment, the method further includes the following operation.

The first information is updated using the new mapping relationship(s).

Specifically, in a practical application, after the network device receives the slice identifier of at least one network slice supported by the neighboring cell from the network device of the neighboring cell, if the first information of the serving cell does not support the at least one slice identifier sent by the network device of the neighboring cell, i.e., at least one slice of the at least one network slice supported by the neighboring cell cannot be mapped into the slice group(s). The network device may send the slice identifier of the at least one network slice that cannot be mapped into the slice group(s) to the core network device, i.e., the third information may contain the slice identifier of at least one network slice that cannot be mapped into the slice group(s). After receiving the third information, the core network device may assign mapping relationship(s) to the at least one network slice that cannot be mapped into the slice group(s), and send the obtained new mapping relationship(s) to the network device. Herein, when the core network device sends the new mapping relationship(s) to the network device, it also necessary to send the new mapping relationship(s) to the terminal, so that the terminal can update the fourth information using the new mapping relationship(s). That is, the mapping relationships between the network device and the terminal have been synchronously updated, which ensures the consistency between the first information of the serving cell and the fourth information of the terminal in this cell, so that the terminal can correctly decode the at least one network slice supported by the neighboring cell.

Illustratively, it is assumed that the neighboring cell of the serving cell supports slice 2, and the slice 2 is mapped into a slice group group_2, but the slice 2 is not supported by the serving cell or the slice 2 has no mapping relationship at the serving cell, i.e., the slice 2 cannot be mapped into a slice group based on the first information of the serving cell. At this time, the base station of the serving cell sends third information to the AMF of the serving cell, the third information includes an identifier of the slice 2, and the third information is at least used to request to assign of a mapping relationship for the slice 2. After receiving the third information, the AMF of the serving cell maps slice 2 into a new slice group or a default slice group (for example, slice group group_5) through its own configuration or the network management device configuration, and sends a new mapping relationship (i.e., slice 2 is mapped into slice group _ 5) to the terminal and the base station of the serving cell. In this way, the base station of the serving cell can map the slice 2 into the slice group_5. That is, the terminal learns that the neighboring cell supports slice 2 by receiving the information of slice group _ 5 being supported by the neighboring cell (i.e., the second information) carried by the system message broadcast by the base station of the serving cell.

In a practical application, when a TA update (TAU) occurs, the terminal may acquire the mapping relationships between the slices and the slice groups of the updated TA from the network side (i.e., the core network device), and update the fourth information by using the updated mapping relationships between the slices and the slice groups. Specifically, when the target cell does not belong to the current registration cell of the terminal, the terminal may initiate a location update, receive the mapping relationships between the slices and the slice group from the network side, and use the new mapping relationships to decode the slice groups broadcast by the network device of the new cell. That is, the terminal decodes the second information broadcast by the network device of the new cell based on the updated fourth information, so as to determine at least one network slice supported by the new neighboring cell.

In a practical application, during a process that the terminal performs cell reselection based on the at least one network slice supported by the neighboring cell, the terminal needs to determine a frequency priority of the at least one network slice supported by the neighboring cell (also be referred to as a frequency priority used by a slice or a frequency priority corresponding to a slice).

Based on this, in an embodiment, the second information further may include a frequency priority of the at least one slice group.

Specifically, in a practical application, after receiving the second information from broadcast, the terminal can determine the at least one network slice supported by the neighboring cell corresponding to the second information based on the second information and the fourth information, determine the frequency priority of the at least one network slice supported by the neighboring cell based on the frequency priority of the at least one slice group, and perform the cell reselection based on the at least one network slice supported by the neighboring cell and the frequency priority of the at least one network slice supported by the neighboring cell. Herein, the specific process that the terminal performs the cell reselection based on the at least one network slice supported by the neighboring cell and the frequency priority of the at least one network slice supported by the neighboring cell may be set based on the requirements, which are not be limited by the embodiments of the disclosure. Illustratively, the terminal may determine whether a network slice with a highest frequency priority among the at least one network slice supported by the neighboring cell is a slice suitable for itself or not, and select a target cell that is suitable for its own slice.

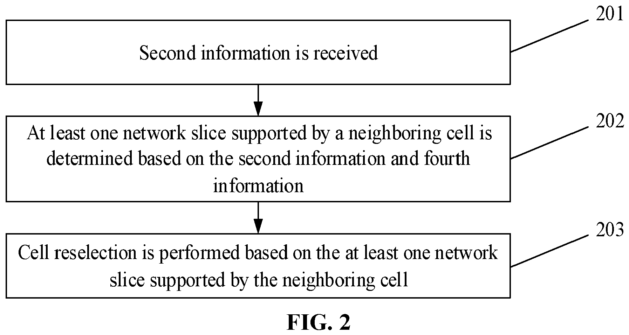

Accordingly, an embodiment of the disclosure further provides a method for processing network slices, which is applied to a terminal. As illustrated in FIG. 2, the method includes the following operations.

At operation 201, second information is received. The second information at least includes at least one slice group identifier of a neighboring cell.

At operation 202, at least one network slice supported by the neighboring cell is determined based on the second information and fourth information. The fourth information represents mapping relationships between the network slices and slice groups.

At operation 203, cell reselection is performed based on the at least one network slice supported by the neighboring cell.

In a practical application, the fourth information corresponds to one or more TAs.

In an embodiment, the method may further the following operation.

The fourth information is acquired.

In an embodiment, acquiring the fourth information includes the following operation.

The fourth information sent by a network side is received.

In a practical application, the terminal can receive the fourth information sent by the core network through a NAS message.

In an embodiment, the specific implementation of operation 203 may include the following operations.

A frequency priority of the at least one network slice supported by the neighboring cell is determined.

The cell reselection is performed based on the frequency priority of the at least one network slice supported by the neighboring cell.

In an embodiment, the specific implementation of operation 201 may include the following operations.

The second information is received from broadcast.

In an embodiment, the method may further include the following operations.

When a TA is updated, mapping relationship(s) between network slice(s) and slice group(s) of the updated TA are acquired.

The fourth information is updated by using the updated mapping relationship(s) between the network slice(s) and the slice group(s).

Herein, it should be noted that the specific processing process of the terminal has been described in detail above, which will not be repeated here.

The embodiments of the disclosure provide methods for processing network slices. The network device maps, based on the first information of the serving cell, the at least one network slice supported by the neighboring cell into at least one slice group, and sends the second information. The first information represents mapping relationships between the network slices and the slice groups, and the second information at least includes at least one slice group identifier. The terminal receives the second information, determines the at least one network slice supported by the neighboring cell based on the second information and fourth information, and performs the cell reselection based on the at least one network slice supported by the neighboring cell. The fourth information represents the mapping relationships between the network slices and the slice groups. With solutions provided in the embodiments of the disclosure, since the network device does not directly send the slice identifier supported by the neighboring cell, but instead sends the slice group identifier corresponding to the network slice, a security risk caused by directly sending the slice identifier is avoided. At the same time, the terminal determines the at least one network slice supported by the neighboring cell based on the at least one slice group identifier and the mapping relationships between the network slices and the slice groups, and performs the cell reselection based on the at least one network slice supported by the neighboring cell, so that the terminal can select a cell that is suitable for its own slice. In other words, in a case that the mapping relationships, of the two TAs, between the slices and the slice groups are different, it can ensure that the terminal can correctly learn network slice(s) supported by the neighboring cell.

In addition, with the solutions provided by the embodiments of the disclosure, through the two interactive mechanisms between the network management device, the network device, the core network device and the terminal, the consistency of the mapping relationships between the slices and the slice groups stored in the network device, core network device and terminal can be ensured, i.e., the coordination of the mapping relationships among the core network, base station and terminal is realized. For example, it is possible to ensure the consistency of the mapping relationships between the slices and the slice groups stored in the network device, core network device and terminal when the terminal is updated across TAs, the mapping relationships between the slices and the slice groups is updated within the TA (i.e., the mapping relationships of the TA between the slices and the slice groups is updated when the TA is not updated), and the terminal is on the edge of a TA.

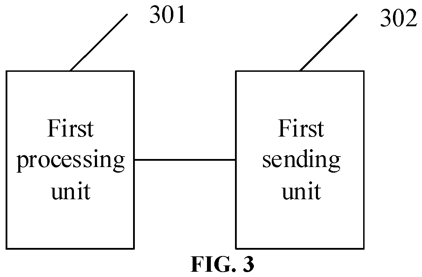

In order to implement the method at the network device side in the embodiment of the disclosure, an embodiment of the disclosure further provides an apparatus for processing network slices, which is arranged on the network device. As illustrated in FIG. 3, the apparatus includes a first processing unit 301 and a first sending unit 302.

The first processing unit 301 is configured to map, based on first information of a serving cell, at least one network slice supported by a neighboring cell into at least one slice group. The first information represents mapping relationships between the network slices and the slice groups.

The first sending unit 302 is configured to send second information. The second information at least includes at least one slice group identifier.

In an embodiment, the apparatus may further include a first acquisition unit, the first acquisition unit is configured to acquire the mapping relationships between the network slices and the slice groups.

In an embodiment, the first acquisition unit is further configured to: receive the mapping relationships between the network slices and the slice groups configured by a network management device; or receive the mapping relationships between the network slices and the slice groups sent by a core network device.

In an embodiment, in the case of receiving the mapping relationships between the network slices and the slice groups configured by the network management device, the first sending unit 302 is further configured to send, to the core network device, a subset or a universal set of the mapping relationships between the network slices and the slice groups configured by the network management device.

In an embodiment, the first acquisition unit is further configured to acquire the at least one network slice supported by the neighboring cell.

In an embodiment, the first acquisition unit is further configured to receive the at least one of network slices supported by the neighboring cell from a network device of the neighboring cell.

In an embodiment, the first sending unit 302 is further configured to send, in a case that at least one slice of the at least one network slice supported by the neighboring cell cannot be mapped into slice group(s) based on the first information, third information to a core network device. The third information is at least used for requesting to assign mapping relationship(s) to the at least one slice that cannot be mapped into the slice group(s).

Accordingly, the apparatus may further include a second receiving unit, the second receiving unit is configured to receive new mapping relationship(s) sent by the core network device; and map the at least one slice that cannot be mapped into the slice group(s) into slice group(s) by using the new mapping relationship(s).

In an embodiment, the first processing unit 301 is further configured to update the first information by using the new mapping relationship(s).

In an embodiment, the first transmitting unit 302 is further configured to broadcast the second information.

In a practical application, the first processing unit 301 may be implemented by a processor in the apparatus for processing network slices. The first sending unit 302 and the second receiving unit may be implemented by a communication interface in the apparatus for processing network slices. The first acquisition unit can be implemented by a processor in combination with the communication interface in the apparatus for processing network slices.

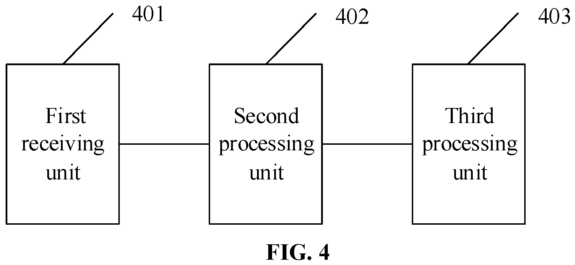

In order to implement the method at the terminal side in the embodiment of the disclosure, an embodiment of the disclosure further provides an apparatus for processing network slices, which is arranged on the terminal. As illustrated in FIG. 4, the apparatus includes a first receiving unit 401, a second processing unit 402 and a third processing unit 403.

The first receiving unit 401 is configured to receive second information. The second information at least includes at least one slice group identifier of a neighboring cell.

The second processing unit 402 is configured to determine at least one network slice supported by the neighboring cell based on the second information and fourth information. The fourth information represents mapping relationships between the network slices and the slice groups.

The third processing unit 403 is configured to perform cell reselection based on the at least one network slice supported by the neighboring cell.

In an embodiment, the apparatus may further include a second acquisition unit, the second acquisition is configured to acquire the fourth information.

In one embodiment, the second acquisition unit is further configured to receive the fourth information sent by the network side.

In an embodiment, the third processing unit 403 is further configured to: determine a frequency priority of the at least one network slice supported by the neighboring cell; and perform the cell reselection based on the frequency priority of the at least one network slice supported by the neighboring cell

In an embodiment, the first receiving unit 401 is further configured to receive the second information from broadcast.

In an embodiment, the second acquisition unit is further configured to: acquire, when a TA is updated, mapping relationship(s) between network slice(s) and slice group(s) of the updated TA.

Accordingly, the second processing unit 402 is further configured to update the fourth information by using the updated mapping relationship(s) between the network slice(s) and the slice group(s).

In a practical application, the first receiving unit 401 may be implemented by a communication interface in the apparatus for processing network slices. The second processing unit 402 and the third processing unit 403 may be implemented by a processor in in the apparatus for processing network slices. The second acquisition unit may be implemented by a processor in combination with the communication interface in the apparatus for processing network slices.

It should be noted that the apparatus for processing network slices provided in the above embodiments only provide examples of the division of program modules during network slice processing. In a practical application, the above processing may be assigned and completed by different program modules as needed. That is, the internal structure of the apparatus is divided into different program modules to complete all or part of the processing described above. In addition, the apparatuses and the methods for processing network slices provided by the above embodiments belong to the same concept, and the specific implementation process of the apparatuses is detailed in the method embodiments, which will not be repeated here.

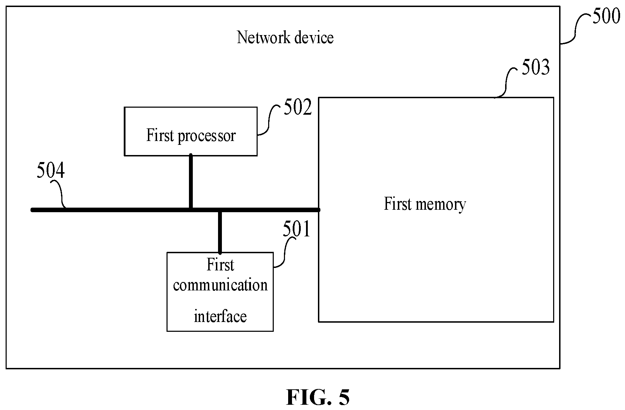

Based on a hardware implementation of the above program modules, and in order to implement the method at the network device side in the embodiment of the disclosure, an embodiment of the disclosure further provides a network device. As illustrated in FIG. 5, the network device 500 includes a first communication interface 501, a first processor 502, a first memory 503 and a bus system 504.

The first communication interface 501 is capable of interacting information with other network devices and/or a terminal.

The first processor 502 is connected with the first communication interface 501 to realize information interaction with other network devices and/or terminals, and is configured to perform the methods provided by one or more technical solutions at the network device side described above when running a computer program.

The computer program is stored in the first memory 503.

Specifically, the first processor 502 is configured to map, based on first information of a serving cell, at least one network slice supported by a neighboring cell into at least one slice group. The first information represents mapping relationships between the network slices and the slice groups.

The first communication interface 501 is configured to send second information. The second information at least includes at least one slice group identifier.

In an embodiment, the first processor 502 is further configured to acquire the mapping relationships between the network slices and the slice groups through the first communication interface 501.

In an embodiment, the first communication interface 501 is further configured to: receive the mapping relationships between the network slices and the slice groups configured by a network management device; or receive the mapping relationships between the network slices and the slice groups sent by a core network device.

In an embodiment, in the case of receiving the mapping relationships between the network slices and the slice groups configured by the network management device, the first communication interface 501 is further configured to send, to the core network device, a subset or a universal set of the mapping relationships between the network slices and the slice groups configured by the network management device.

In an embodiment, the first processor 502 is further configured to acquire the at least one network slice supported by the neighboring cell through the first communication interface 501.

In an embodiment, the first communication interface 501 is further configured to receive the at least one of network slices supported by the neighboring cell sent by a network device of the neighboring cell.

In an embodiment, the first communication interface 501 is further configured to: send, in a case that at least one slice of the at least one network slice supported by the neighboring cell cannot be mapped into slice group(s) based on the first information, third information to a core network device. The third information is at least used for requesting to assign mapping relationship(s) to the at least one slice that cannot be mapped into the slice group(s).

The first communication interface 501 is further configured to receive new mapping relationship(s) sent by the core network device; and map the at least one slice that cannot be mapped into the slice group(s) into slice group(s) by using the new mapping relationship(s).

In an embodiment, the first processor 502 is further configured to update the first information by using the new mapping relationship(s).

In an embodiment, the first communication interface 501 is further configured to broadcast the second information.

It should be noted that the specific processing processes of the first processor 502 and the first communication interface 501 and may be understood with reference to the above methods.

In a practical application, the various components in the network device 500 are coupled together through the bus system 504. It should be understood that the bus system 504 is configured to implement connection communication between these components. The bus system 504 includes a power bus, a control bus and a status signal bus in addition to a data bus. However, the various buses are labeled as the bus system 504 in FIG. 5 for clarity.

The first memory 503 in the embodiments of the disclosure is configured to store various types of data to support the operation of the network device 500. Examples of these data include any computer program for operating on the network device 500.

The methods disclosed in the above embodiments of the disclosure may be applied to the first processor 502, or implemented by the first processor 502. The first processor 502 may be an integrated circuit chip with a signal processing capability. The steps of the above methods may be accomplished by an integrated logic circuit in the form of hardware in the first processor 502 or instructions in the form of software during the implementation. The first processor 502 described above may be a general processor, a Digital Signal Processor (DSP), or other programmable logic devices, a discrete gate or transistor logic device, a discrete hardware component, or the like. The first processor 502 may implement or perform the various methods, steps and logic blocks disclosed in the embodiments of the disclosure. The general processor may be a microprocessor or any conventional processor or the like. The steps of the methods disclosed in the embodiments of the disclosure may be directly executed and completed by a decoding processor in the form of hardware or by a combination of the hardware in the decoding processor and software modules. The software modules may be located in a storage medium in the first memory 503, and the first processor 502 reads information in the first memory 503 and completes the steps of the above methods in combination with hardware thereof.

In an exemplary embodiment, the network device 500 may be implemented by one or more Application Specific Integrated Circuits (ASICs), DSPs, Programmable Logic Devices (PLDs), Complex Programmable Logic Devices (CPLDs), Field-Programmable Gate Arrays (FPGAs), general processors, controllers, Micro Controller Units (MCUs), microprocessors, or other electronic elements, to perform the above methods.

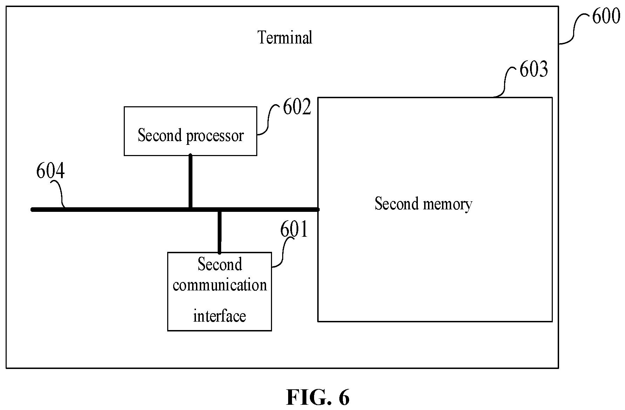

Based on a hardware implementation of the above program modules, and in order to implement the methods at the terminal side in the embodiment of the disclosure, an embodiment of the disclosure further provides a terminal. As illustrated in FIG. 6, the terminal 600 includes a second communication interface 601, a second processor 602, a second memory 603 and a bus system 604.

The second communication interface 601 is capable of interacting information with other terminals and/or a network side.

The second processor 602 is connected with the second communication interface 601 to realize information interaction with the network side, and is configured to perform the methods provided by one or more technical solutions at the terminal side described above when running a computer program.

The computer program is stored on the second memory 603.

A second memory 603 on which the computer program is stored.

Specifically, the second communication interface 601 is configured to receive second information. The second information includes at least one slice group identifier of a neighboring cell.

The second processor 602 configured to: determine at least one network slice supported by the neighboring cell based on the second information and fourth information, the fourth information represents mapping relationships between the network slices and the slice groups; and perform cell reselection based on the at least one network slice supported by the neighboring cell.

In an embodiment, the second processor 602 is further configured to acquire the fourth information through the second communication interface 601.

In an embodiment the second communication interface 601 is further configured to receive the fourth information sent by the network side.

In an embodiment, the second processor 602 is further configured to: determine a frequency priority of the at least one network slice supported by the neighboring cell; and perform the cell reselection based on the frequency priority of the at least one network slice supported by the neighboring cell.

In an embodiment, the second communication interface 601 is further configured to receive the second information from broadcast.

In an embodiment, the second processor 602 is further configured to: acquire, when a TA is updated, mapping relationship(s) between network slice(s) and slice group(s) of the updated TA; and update the fourth information by using the updated mapping relationship(s) between the network slice(s) and the slice group(s) through the second communication interface 601.

It should be noted that the specific processing processes of the second communication interface 601 and the second processor 602 may be understood with reference to the above methods.

In a practical application, the various components in the terminal 600 are coupled together through the bus system 604. It should be understood that the bus system 604 is configured to implement connection communication between these components. The bus system 604 includes a power bus, a control bus and a status signal bus in addition to a data bus. However, the various buses are labeled as the bus system 604 in FIG. 6 for clarity.

The second memory 603 in the embodiments of the disclosure is configured to store various types of data to support the operation of the terminal 600. Examples of these data include any computer program for operating on the terminal 600.

The methods disclosed in the above embodiments of the disclosure may be applied to the second processor 602, or implemented by the second processor 602. The second processor 602 may be an integrated circuit chip with a signal processing capability. The steps of the above methods may be accomplished by an integrated logic circuit in the form of hardware in the second processor 602 or instructions in the form of software during the implementation. The second processor 602 described above may be a general processor, a DSP, or other programmable logic devices, a discrete gate or transistor logic device, a discrete hardware component, or the like. The second processor 602 may implement or perform the various methods, steps and logic blocks disclosed in the embodiments of the disclosure. The general processor may be a microprocessor or any conventional processor or the like. The steps of the methods disclosed in the embodiments of the disclosure may be directly executed and completed by a decoding processor in the form of hardware or by a combination of the hardware in the decoding processor and software modules. The software modules may be located in a storage medium in the second memory 603, and the second processor 602 reads information in the second memory 603 and completes the steps of the above methods in combination with hardware thereof.

In an exemplary embodiment, the terminal 600 may be implemented by one or more ASICs, DSPs, PLDs, CPLDs, FPGAs, general processors, controllers, MCUs, microprocessors, or other electronic elements, to perform the above methods.

It should be understood that the memory (the first memory 503 or the second memory 603) in embodiments of the disclosure may be a volatile memory, a non-volatile memory, or include both the volatile memory and the non-volatile memory. The non-volatile memory may be a Read-Only Memory (ROM), a Programmable ROM (PROM), an Erasable PROM (EPROM), an Electrically EPROM (EEPROM), a Ferromagnetic Random Access Memory (FRAM), a flash memory, a magnetic surface memory, an optical disc, or a Compact Disc ROM (CD-ROM). The magnetic surface memory may be a magnetic disk memory or a magnetic tape memory. The volatile memory may be a Random Access Memory (RAM), which serves as an external cache. By way of illustration but not limitation, many forms of RAMs are available, such as a Static RAM (SRAM), a Synchronous SRAM (SSRAM), a Dynamic RAM (DRAM), a Synchronous DRAM (SDRAM), a Double Data Rate SDRAM (DDRSDRAM), an Enhanced SDRAM (ESDRAM), a SyncLink DRAM (SLDRAM), a Direct Rambus RAM (DRRAM). The memories described in the embodiments of the disclosure are intended to, but are not limited to, include these and any other suitable types of memories.

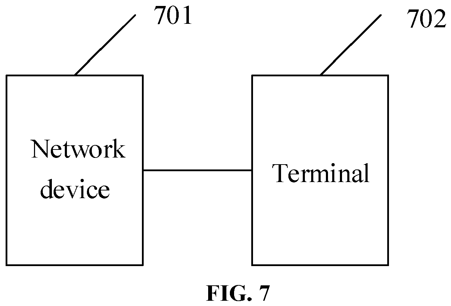

In order to implement the method provided by the embodiments of the disclosure, an embodiment of the disclosure further provides a system for processing network slices. As illustrated in FIG. 7, the system includes a network device 701 and a terminal 702.

Here, it should be noted that the specific processing processes of the network device 701 and the terminal 702 have been described in detail above, which will not be repeated here.

In an exemplary embodiment, an embodiment of the disclosure further provides a storage medium, i.e., a computer storage medium, specifically a computer-readable storage medium, including, for example, the first memory 503 for storing a computer program. The computer program may be executed by the first processor 502 in the network device 500 to complete the steps of methods at the network device side described above. For another example, the computer-readable storage medium may include the second memory 603 for storing a computer program, which may be executed by the second processor 602 in the terminal 600 to complete the steps of the methods at the terminal side described above. The computer-readable storage medium may be a memory, such as a FRAM, a ROM, a PROM, an EPROM, an EEPROM, a flash memory, a magnetic surface memory, an optical disk, or a CD-ROM, etc.

It should be noted that the "first", "second" and the like are used to distinguish similar objects, rather than describing a specific order or sequence.

In addition, the technical solutions described in the embodiments of the disclosure may be arbitrarily combined without conflicting with each other.

The above descriptions are only preferred embodiments of the disclosure and are not intended to limit the scope of protection of the disclosure.

## Claims

1. A method for processing network slices, applied to a network device, the method comprising:
mapping, based on first information of a serving cell, at least one network slice supported by a neighboring cell into at least one slice group, the first information representing mapping relationships between network slices and slice groups, and
sending second information, the second information at least comprising at least one slice group identifier.

2. The method of claim 1, wherein the second information further comprises a frequency priority of the at least one slice group.

3. The method of claim 1, wherein the first information corresponds to one or more tracking areas (TAs).

4. The method of claim 1, further comprising:
acquiring the mapping relationships between the network slices and the slice groups.

5. The method of claim 4, wherein acquiring the mapping relationships between the network slices and the slice groups comprises:
receiving the mapping relationships between the network slices and the slice groups configured by a network management device; or
receiving the mapping relationships between the network slices and the slice groups sent by a core network device.

6. The method of claim 5, wherein in a case of receiving the mapping relationships between the network slices and the slice groups configured by the network management device, the method further comprises:
sending, to the core network device, a subset or a universal set of the mapping relationships between the network slices and the slice groups configured by the network management device.

7. The method of claim 1, further comprising:
acquiring the at least one network slice supported by the neighboring cell.

8. The method of claim 7, wherein acquiring the at least one network slice supported by the neighboring cell comprises:
receiving the at least one network slice supported by the neighboring cell sent by a network device of the neighboring cell.

9. The method of claim 1, further comprising:
in a case that at least one slice of the at least one network slice supported by the neighboring cell cannot be mapped into slice group(s) based on the first information, sending third information to a core network device, wherein the third information is at least used for requesting to assign mapping relationship(s) to the at least one slice that cannot be mapped into the slice group(s); and
receiving new mapping relationship(s) sent by the core network device; and mapping the at least one slice that cannot be mapped into the slice group(s) into slice group(s) by using the new mapping relationship(s).

10. The method of claim 9, further comprising:
updating the first information by using the new mapping relationship(s).

11. The method of any one of claims 1 to 10, wherein the second information is broadcast.

12. A method for processing network slices, applied to a terminal, the method comprising:
receiving second information, the second information at least comprising at least one slice group identifier of a neighboring cell;
determining at least one network slice supported by the neighboring cell based on the second information and fourth information, the fourth information representing mapping relationships between network slices and slice groups; and
performing cell reselection based on the at least one network slice supported by the neighboring cell.

13. The method of claim 12, wherein the second information further comprises a frequency priority of the at least one slice group.

14. The method of claim 12, wherein the fourth information corresponds to one or more tracking areas (TAs).

15. The method of claim 12, wherein the method further comprises:
acquiring the fourth information.

16. The method of claim 15, wherein acquiring the fourth information comprises:
receiving the fourth information sent by network side.

17. The method of claim 12, wherein performing the cell reselection based on the at least one network slice supported by the neighboring cell comprises:
determining a frequency priority of the at least one network slice supported by the neighboring cell; and
performing the cell reselection based on the frequency priority of the at least one network slice supported by the neighboring cell.

18. The method of claim 12, wherein receiving the second information comprises:
receiving the second information from broadcast.

19. The method of any one of claims 12 to 18, further comprising:
when a TA is updated, acquiring mapping relationship(s) between network slice(s) and slice group(s) of the updated TA; and
updating the fourth information by using the updated mapping relationship(s) between the network slice(s) and the slice group(s).

20. An apparatus for processing network slices, comprising:
a first processing unit, configured to map, based on first information of a serving cell, at least one network slice supported by a neighboring cell into at least one slice group, the first information representing mapping relationships between network slices and slice groups; and
a first sending unit, configured to send second information, the second information at least comprising at least one slice group identifier.

21. An apparatus for processing network slices, comprising:
a first receiving unit, configured to receive second information, the second information at least comprising at least one slice group identifier of a neighboring cell;
a second processing unit, configured to determine at least one network slice supported by the neighboring cell based on the second information and fourth information, the fourth information representing mapping relationships between network slices and slice groups; and
a third processing unit, configured to perform cell reselection based on the at least one network slice supported by the neighboring cell.

22. A network device, comprising a first processor and a first communication interface, wherein
the first processor is configured to map, based on first information of a serving cell, at least one network slice supported by a neighboring cell into at least one slice group, the first information representing mapping relationships between network slices and slice groups; and
the first communication interface is configured to send second information, the second information at least comprising at least one slice group identifier.

23. A terminal, comprising a second communication interface and a second processor, wherein
the second communication interface is configured to receive second information, the second information at least comprising at least one slice group identifier of a neighboring cell; and
the second processor is configured to: determine at least one network slice supported by the neighboring cell based on the second information and fourth information, the fourth information representing mapping relationships between network slices and slice groups; and perform cell reselection based on the at least one network slice supported by the neighboring cell.

24. A network device, comprising a first processor and a first memory configured to store a computer program capable of running on a processor,
wherein the first processor is configured to perform operations of the method of any one of claims 1 to 11 when running the computer program.

25. A terminal comprising a second processor and a second memory configured to store a computer program capable of running on a processor,
wherein the second processor is configured to perform operations of the method of any one of claims 12 to 19 when running the computer program.

26. A storage medium storing a computer program, wherein when the computer program is executed by a processor, operations of the method of any one of claims 1 to 11 are implemented, or operations of the method of any one of claims 12 to 19 are implemented.
